(19) **Europäisches Patentamt / European Patent Office / Office européen des brevets**

(11) **EP 4 250 536 A1**

(12) **EUROPEAN PATENT APPLICATION**

(43) Date of publication:
**27.09.2023 Bulletin 2023/39**

(21) Application number: **22305373.7**

(22) Date of filing: **25.03.2022**

(51) International Patent Classification (IPC):
**H02K 1/24** *(2006.01)* **H02K 1/2746** *(2022.01)*
**H02K 1/30** *(2006.01)*

(52) Cooperative Patent Classification (CPC):
**H02K 1/246; H02K 1/2746; H02K 1/30;**
**H02K 15/022;** H02K 2201/03

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Deeper Pulse**
**65390 Sarniguet (FR)**

(72) Inventor: **RTIMI, Youness**
**65390 Sarniguet (FR)**

(74) Representative: **A.P.I. Conseil**
**Immeuble Newton**
**4, rue Jules Ferry**
**64000 Pau (FR)**

(54) **ROTORS, RELUCTANCE MACHINES, SYSTEMS AND MANUFACTURING METHODS FOR ROTORS**

(57) The subject application provides a rotor assembly for radial/axial synchronous reluctance machines, a system assembly and method for producing a rotor assembly.

The rotor assembly (100) comprises an elongated body (110) which cross-section comprises at least one pair of a first rotor magnetic pole segment (112) and a second rotor magnetic pole segment (112).

The rotor assembly (100) is arranged such that, when being exposed to a magnetic flux, a free end of the first rotor magnetic pole segment (112), called first free end (1122a) and a free end of the second rotor magnetic pole segment (112), called second free end (1123a), are facing each other, the first free ends (1122a, 1123a) having no surface contact with one another or a minimum surface contact (1125) with one another, thereby forming a flux barrier for inhibiting the magnetic flux from flowing between the first free ends (1122a,1123a).

[Fig. 9]

Fig. 9

## Description

## Technical Field

The subject application relates to rotor assemblies for radial/axial synchronous reluctance machines, system assemblies and methods for producing rotor assemblies.

Similar devices may be found in EP1786088B1, EP2406870B1 or EP3128647B1.

## Background Art

Known rotors for synchronous reluctance machines are typically formed by a substantially cylindrical body having a plurality of high permeability soft magnetic material sections and a plurality of flux barrier sections, thereby forming one or more pole pairs. The high permeability soft magnetic material sections and the flux barrier sections differ from one another to a varying degree of magnetic permeability, the section having a high magnetic permeability being generally designated as the d-axis of the rotor, and the section having a comparably lower magnetic permeability being generally designated as the q-axis of the rotor. An optimal torque yield is achieved when the d-axis has a magnetic permeability as high as possible while the q-axis has a magnetic permeability as low as possible.

In practice, this is normally achieved by making cut-outs of proper shape in the cylindrical body and filling the cut-outs with air. Then, magnetic flux is inhibited in the direction of the q-axis (i.e., the reluctance increases) and, therefore, the permeability decreases.

However, it has been found by the inventors that this practice applied to the current rotor topologies results in a relatively large waste of raw high permeability soft magnetic material and environmental pollution as more than the necessary amount of raw high permeability soft magnetic material is used.

It is an object of the present invention to provide a novel rotor topology designed to overcome drawbacks typically associated with known rotor topologies.

## Summary of Subject application

The subject application provides a rotor assembly for radial/axial synchronous reluctance machines, a system assembly and method for producing a rotor assembly, as described in the accompanying claims.

Dependent claims describe specific embodiments of the subject application.

These and other aspects of the subject application will be apparent from an elucidated based on the embodiments described hereinafter.

## Brief Description of Drawings

Further details, aspects and embodiments of the subject application will be described, by way of example only, with reference to the drawings. In the drawings, like reference numbers are used to identify like or functionally similar elements. Elements in the figures are illustrated for simplicity and clarity and have not necessarily been drawn to scale.

Figure 1 shows an elongated body of a rotor assembly according to the subject application.
Figure 2 shows a cross section of a four poles rotor assembly according to the subject application.
Figure 3 shows a cross section of a pole of a rotor assembly according to the subject application.
Figure 4 shows another cross section of a pole of a rotor assembly according to the subject application.
Figure 5 shows a cross section of a four poles rotor assembly according to the subject application.
Figure 6 shows a cross section of a two poles rotor assembly according to the subject application.
Figure 7 shows another cross section of a four poles rotor assembly according to the subject application.
Figure 8 shows a system assembly according to the subject application.
Figure 9 show a detailed view of the system assembly of figure 8.
Figure 10 shows an exploded view of the system assembly of figure 8.
Figure 11 shows a cross section of the system assembly of figure 8.
Figure 12 shows another system assembly according to the subject application.
Figure 13 shows an exploded view of the system assembly of figure 12.
Figure 14 shows a cross section of the system assembly of figure 12.
Figure 15 shows a cross section of a system assembly according to the subject application.
Figure 16 shows a cross section of another system assembly according to the subject application.
Figure 17 shows a schematic flow diagram according to the subject application.
Figure 18 shows another schematic flow diagram according to the subject application.
Figure 19 shows a view of at least one step of the schematic flow diagram of figure 18.
Figure 20 shows a view of at least one step of the schematic flow diagram of figure 18.
Figure 21 shows a view of at least one step of the schematic flow diagram of figure 18.
Figure 22 shows a result of at least one step of the schematic flow diagram of figure 18.
Figure 23 shows a view of at least one step of the schematic flow diagram of figure 18 where the rotor system is arranged with respect to a stator yoke.

## Description of Embodiments

Because the illustrated embodiments of the subject application may, for the most part, be composed of components known to the skilled person, details will not be explained in any greater extent than that considered necessary for the understanding and appreciation of the underlying concepts of the subject application, in order not to obfuscate or distract from the teachings of the subject application.

Inventors have found that a rotor assembly of the subject application requires less conductive raw material than the rotor of the prior art.

Surprisingly, the inventors have also found that a synchronous reluctance machine that includes the rotor assembly of the subject application may achieve improved performance with respect to current synchronous reluctance machines, particularly with respect to the torque but also with respect to torque ripples.

**The rotor assembly**

The subject application relates to a rotor assembly for a radial synchronous reluctance machine.

The radial synchronous reluctance machine is of known type and therefore will not be further detailed.

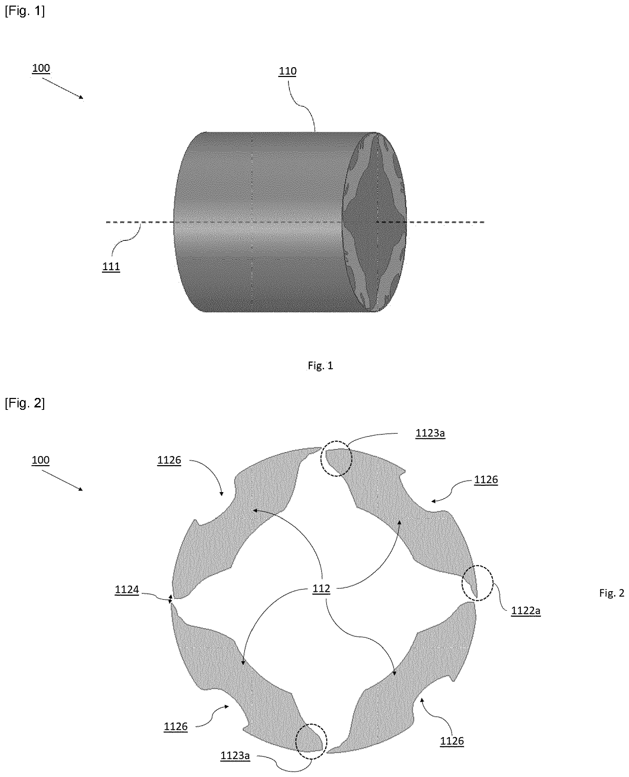

Referring to figure 1, the rotor assembly 100 comprises an elongated body 110.

**- the elongated body of the rotor assembly**

In an embodiment, the elongated body 110 has a substantially cylindrical shape with desired dimensions.

In an example, the elongated body 110 is a tubular body.

In another example, the elongated body 110 is a hollow cylinder body.

Further, in the subject application, the elongated body 110 has a central longitudinal rotation axis 111, a circumference and a cross-section.

As used herein, the term "circumference" is defined as a circumferential surface of the elongated body 110.

Further, the cross-section is seen in a plane perpendicular to the central longitudinal rotation axis 111.

Particularly, the cross-section exhibits a width dimension and a radial dimension perpendicular to the width dimension.

**- the rotor magnetic pole segments**

In the subject application, as shown in figure 2, the cross-section of the elongated body 110 comprises at least one pair of rotor magnetic pole segment 112 including a first rotor magnetic pole segment 112 and a second rotor magnetic pole segment 112.

In other words, one should understand that the cross-section of the elongated body 110 may comprise more than one pair of rotor magnetic pole segments 112.

As used herein, the term "segment" is defined as a rotor magnetic pole that can be considered separately from the other rotor magnetic poles.

In an embodiment, at least one rotor magnetic pole segment 112 is made of relatively high permeability soft magnetic material.

In an implementation of the current embodiment, the relatively high permeability soft magnetic material is a ferromagnetic-based material.

In an example of the current implementation of the current embodiment, the ferromagnetic-based material is chosen from the group comprising: a ferrite, iron powder and bulk iron.

However, other materials that have a magnetic permeability greater than that of air may be contemplated, without requiring any substantial modification of the subject application.

**- positioning the rotor magnetic pole segments**

In the subject application, the first and second rotor magnetic pole segments 112 are arranged relatively to each other and circumferentially adjacent to one another around the central longitudinal rotation axis 111.

With such arrangement, when the rotor assembly 100 rotates, the rotor magnetic pole segments 112 rotate at the same time relatively while keeping the same relative positions of the rotor magnetic pole segments 112.

In an example, the first and second rotor magnetic pole segments 112 are evenly arranged around the circumference.

**- the structure of a rotor magnetic pole segment**

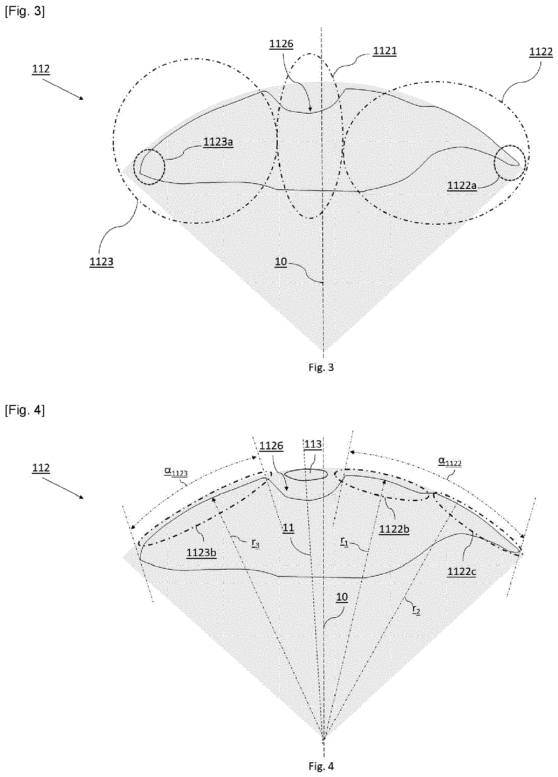

As shown in figure 3, in the subject application, as seen in a clockwise direction or in an anti-clockwise direction of the cross-section of the elongated body 110, each rotor magnetic pole segment 112 comprises a central region 1121, a first exterior region 1122 and a second exterior region 1123.

In the subject application, any desired proportions of the different regions of each rotor magnetic pole segment 112 may be contemplated, without requiring any substantial modification of the subject application.

Further, in the subject application, the central region 1121 of each rotor magnetic pole segment is flanked by the first exterior region 1122 and the second exterior region 1123 such that the first exterior region 1122 and the second exterior region 1123 respectively extend from the central region 1121.

In other words, one should understand that the first exterior region 1122 and the second exterior region 1123 of each rotor magnetic pole segment 112 border respective lateral sides of the central region 1121.

In an embodiment, the first exterior region 1122 and the second exterior region 1123 of each rotor magnetic pole segment 112 are attached to respective lateral sides of the central region 1121.

In another embodiment, for at least one rotor magnetic pole segment 112, the first exterior region 1122 and/or the second exterior region 1123 has a tapered shape that is increasingly narrower from the central region 1121 toward its respective free end.

As used herein, the term "tapered shape" is defined as a shape having a first tangent to an upper surface of the rotor magnetic pole segment 112 and a second tangent to a lower surface of the rotor magnetic pole segment 112 that converge toward a single point located at or beyond the respective free end.

In an implementation of the current embodiment, the tapered shape is such that it forms an acute angle with an apex point coinciding with the respective free end.

In another implementation of the current embodiment, the tapered shape is a tapered rounded shape.

From the foregoing, one should understand that the first exterior region 1122 alone, the second exterior region 1123 alone or both the first exterior region 1122 and the second exterior region 1123 may have a tapered shape.

In an example, both the first exterior region 1122 and the second exterior region 1123 have a tapered shape toward respective free end.

In another example, as shown in figure 2 and figure 3, the first exterior region 1122 has a tapered shape toward its free end and the second exterior region 1123 has a relatively massive surface shape toward its respective free end relative to the tapered surface shape of the first exterior region 1122.

For instance, the massive surface shape comprises an outwardly bulged area extending toward the free end.

In another example, the second exterior region 1123 has a tapered shape toward its free end and the first exterior region 1122 has a relatively massive surface shape toward its free end relative to the tapered surface shape of the second exterior region 1123.

For instance, the massive surface shape comprises an outwardly bulged area extending toward the free end.

In yet another embodiment, as shown in figure 4, for at least one rotor magnetic pole segment 112, the angular extension $\alpha_{1122}$ of the first exterior region 1122 is different from the angular extension $\alpha_{1123}$ of the second exterior region 1123.

In an example, the angular extension $\alpha_{1122}$ of the first exterior region 1122 is greater than the angular extension $\alpha_{1123}$ of the second exterior region 1123.

In another example, the angular extension $\alpha_{1123}$ of the second exterior region 1123 is greater than the angular extension $\alpha_{1122}$ of the first exterior region 1122.

- **the asymmetric character of a rotor magnetic pole segment**

Further, in the subject application, as shown in figure 2, figure 3, figure 4, figure 5, figure 6, figure 7, figure 11, figure 14, figure 15 and figure 16, the cross-section of each rotor magnetic pole segment 112 is asymmetrical with respect to at least the bisector 10 of the rotor magnetic pole segment 112.

In an example, at least one rotor magnetic pole segment 112 is further asymmetrical with respect to the bisector 10 of the central region 1121 of the rotor magnetic pole segment 112.

In another example, at least one rotor magnetic pole segment 112 is further asymmetrical with respect to the bisector 10 of the first exterior region 1122 of the rotor magnetic pole segment 112.

In yet another example, at least one rotor magnetic pole segment 112 is further asymmetrical with respect to the bisector 10 of the second exterior region 1123 of the rotor magnetic pole segment 112.

In yet another example, the free ends of at least one rotor magnetic pole segment 112 are asymmetrical to each other.

In an embodiment, all the rotor magnetic pole segments 112 are identically asymmetrical.

In another embodiment, none of the rotor magnetic pole segments 112 are identically asymmetrical.

In yet another embodiment, at least two rotor magnetic pole segments 112 are identically asymmetrical.

- **arrangement of the rotor magnetic pole segments**

Further, in the subject application, the rotor assembly 100 is arranged to behave in a predetermined manner when being exposed to a magnetic flux.

Indeed, a free end of the first exterior region 1122 of the first rotor magnetic pole segment 112, called first free end 1122a and a free end of the second exterior region 1123 of the second rotor magnetic pole segment 112, called second free end 1123a, are facing each other.

Furthermore, the first free end 1122a and the second free end 1123a have no surface contact with one another or a minimum surface contact 1125 with one another, thereby forming a flux barrier for inhibiting the magnetic flux from flowing between the first free end 1122a and the second free end 1123a, whereby reluctance is increased in the surface separating the first free end 1122a and the second free end 1123a or in the minimum surface contact 1125.

In particular, when a minimum surface contact 1125 exists, the minimum surface contact 1125 is designed to be so thin that it behaves magnetically as a nonmagnetic material when being exposed to the magnetic flux.

**First embodiment of the subject application: precision regarding the arrangement of the free ends of adjacent rotor magnetic pole segments**

The inventors have found that specific arrangement of the first free end 1122a and the second free end 1123a exhibits improvements relative to the torque.

- **where no surface contact exists between the free ends**

In an embodiment, as shown in figure 2, where no surface contact exists between the first free end 1122a and the second free end 1123a, the angular distance that exists between the first free end 1122a and the second free end 1123a is a predetermined angular distance 1124.

Furthermore, the rotor assembly 100 is further arranged such that a ratio of the predetermined angular distance 1124 relative to a radius of the rotor assembly 100 is between 0,1% and 20%.

In an implementation of the current embodiment, the ratio of the predetermined angular distance 1124 relative to a radius of the rotor assembly 100 is between 2% and 15%.

In another implementation of the current embodiment, the ratio of the predetermined angular distance 1124 relative to a radius of the rotor assembly 100 is between 5% and 10%.

- **where a minimum surface contact exists between the free ends**

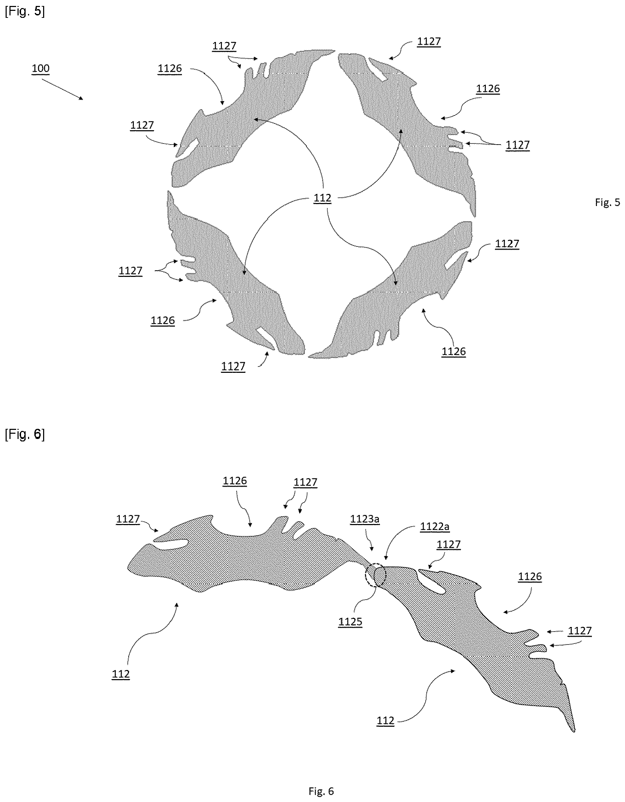

In another embodiment, as shown in figure 6, where a minimum surface contact 1125 exists between the first free end 1122a and the second free end 1123a, the rotor assembly 100 is further arranged such that a ratio of the minimum surface contact 1125 relative to a radius of the rotor assembly 100 is less than or equal to 10%.

In an implementation of the current embodiment, the ratio of the minimum surface contact 1125 relative to a radius of the rotor assembly 100 is less than or equal to 5%.

In another implementation of the current embodiment, the ratio of the minimum surface contact 1125 relative to a radius of the rotor assembly 100 is less than or equal to 2%.

**Second embodiment of the subject application: the recess**

The inventors have found that forming a recess at specific locations of the rotor magnetic pole segment 112 exhibits improvements relative to torque ripples.

In an embodiment of the subject application, as shown in figure 2, figure 3, figure 4, figure 5, figure 6, figure 7, figure 9, figure 10, figure 11, figure 12, figure 13, figure 13, figure 15 and figure 16, the rotor assembly 100 further includes that, for at least one rotor magnetic pole segment 112, the central region 1121 comprises at least one inwardly facing recessed portion 1126.

Preferably, the inwardly facing recessed portion 1126 is provided on an outer circumferential surface of the central region 1121.

In an example, the inwardly facing recessed portion 1126 is U-shaped.

In another example, the inwardly facing recessed portion 1126 is V-shaped.

However, other shapes of the inwardly facing recessed portion 1126 may be contemplated, without requiring any substantial modification of the subject application.

- **the recess is shifted**

In an implementation of the current embodiment, as shown in figure 4, the recessed portion 1126 is provided with a bisector 11 that is angularly offset relative to the bisector 10 of the rotor magnetic pole segment 112.

In another implementation of the current embodiment, a deepest point of the depth of the recessed portion 1126 is angularly offset relative to the bisector 11 of the recessed portion 1126.

- **the island region**

In another implementation of the current embodiment, as shown in figure 4, at least one rotor magnetic pole segment 112 further comprises an island region 113 facing and spaced from the recessed portion 1126.

In an aspect of the current implementation of the current embodiment, at least one rotor magnetic pole segment 112 further comprises a bridge (not shown) in between the island region 113 and the recessed portion 1126, and that is configured for connecting the island region 113 and the recessed portion 1126.

In particular, the bridge is designed to be so thin that it behaves magnetically as a nonmagnetic material when being exposed to a magnetic flux.

**Third embodiment of the subject application: precision regarding different regions of the cross-section of a rotor magnetic pole segment**

The inventors have found that adjusting the radius of the different sections of the rotor magnetic pole segment 112 exhibits improvements relative to torque and torque ripples.

In an embodiment, as shown in figure 4, the cross-section of the elongated body 110 further comprises, for at least one rotor magnetic pole segment 112, a specific arrangement.

Particularly, the first exterior region 1122 has at least first and second outwardly arcuated sections, called first and second sections 1122b, 1122c.

In particular, the first section 1122b is closer to the central region 1121 than the second section 1122c.

Also, the second exterior region 1123 has at least one outwardly arcuated section, called third section 1123b.

Furthermore, the first, second and third sections 1122b, 1122c, 1123b each have a substantially constant radius of curvature.

In addition, the first and second sections 1122b, 1122c respectively have a first radius $r_1$ and a second radius $r_2$.

In particular, the second radius $r_2$ is equal to or longer than the first radius $r_1$.

Finally, the third section 1123b has a third radius $r_3$ different from the second radius $r_2$.

In an example of the current embodiment, the first radius $r_1$ substantially equals a rotor radius of the central longitudinal rotation axis 111.

In another example of the current embodiment, the second radius $r_2$ substantially equals the third radius $r_3$.

In yet another example of the current embodiment, the second radius $r_2$ is substantially smaller than the third radius $r_3$.

In yet another example of the current embodiment, the second radius $r_2$ is substantially longer than the third radius $r_3$.

In an implementation of the current embodiment, the first and second sections 1122b, 1122c are series connected via a transition portion.

In an example of the current implementation of the current embodiment, the transition portion is curved.

In another example of the current implementation of the current embodiment, the transition portion is angled.

In yet another example of the current implementation of the current embodiment, the transition portion is squared.

However, other shapes of the transition portion may be contemplated, without requiring any substantial modification of the subject application.

**- the teeth**

The inventors have found that forming teeth at specific locations of the rotor magnetic pole segment 112 exhibits improvements relative to torque ripples.

In an implementation of the current embodiment, as shown in figure 5, figure 6, figure 7, figure 11, figure 14, figure 15 and figure 16, the first and/or second and/or third sections 1122b, 1122c, 1123b, each comprise at least one cut out portion forming tooth 1127 thereby locally modulating an air gap between the rotor assembly 100 and a stator so as to smooth the torque, whereby reducing torque ripples.

In other words, one should understand that the first and/or second and/or third sections 1122b, 1122c, 1123b each may comprise more than one cut out portions forming teeth 1127.

In an aspect of the implementation of the current embodiment, the number of cut out portions forming teeth 1127 of the first and/or second and/or third sections 1122b, 1122c, 1123b are different of each other.

In an example of the implementation of the current embodiment, the first section 1122b comprises two cut out portions forming teeth 1127 and the third section 1223b comprises one cut out portion forming tooth 1127.

In another example of the implementation of the current embodiment, the first section 1122b comprises one cut out portion forming tooth 1127 and the third section 1223b comprises two cut out portions forming teeth 1127.

**Fourth embodiment of the subject application: solidifying the rotor assembly**

The inventors have found that surrounding the rotor magnetic pole segments 112 with hollow frame 1128 of material exhibits improvements relative to the solidity of the rotor assembly 100.

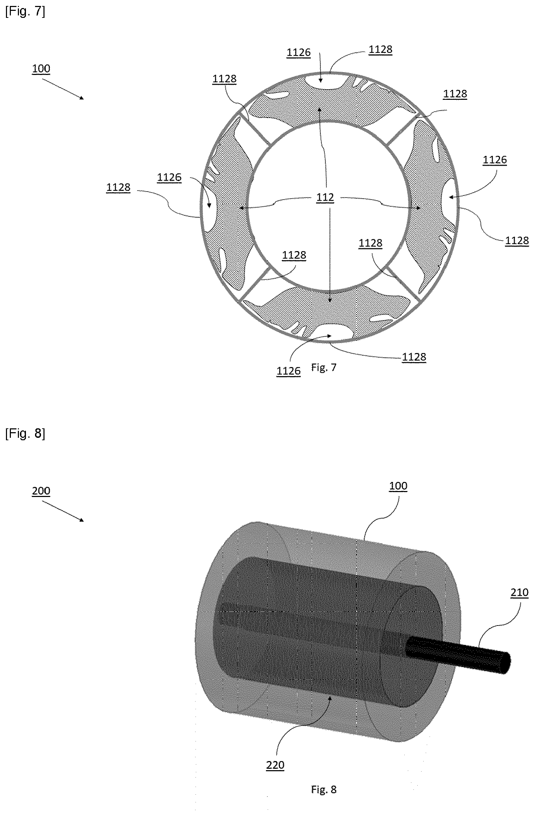

In an embodiment, as shown in figure 7, the cross-section of the elongated body 110 further comprises at least one pair of contiguous hollow frames 1128 of material.

Particularly, there are as many pairs of contiguous hollow frames 1128 of material as the number of pairs of rotor magnetic pole segments 112.

Also, each rotor magnetic pole segment 112 is circumscribed by a respective hollow frame 1128.

In an implementation of the current embodiment, the material of the hollow frames 1128 is made of nonmagnetic material.

In an example, the nonmagnetic material is made from aluminum.

In another example, the nonmagnetic material is made from plastic.

In another example, the nonmagnetic material is made from resins.

In yet another example, the nonmagnetic material is made from polymers.

However, other materials that have nonmagnetic conductive properties may be contemplated, without requiring any substantial modification of the subject application.

In another implementation of the current embodiment, the material of the hollow frames 1128 is a ferromagnetic material that is so thin that it behaves as a nonmagnetic material when being exposed to a magnetic flux.

**Systems including the rotor assembly**

The subject application also relates to a system assembly for a radial synchronous reluctance machine.

## - A first system

In an embodiment of the system assembly, as shown in figure 8, figure 9, figure 10 and figure 11, a first system assembly 200 comprises a rotor assembly 100 as described above, a rotor shaft 210 and a first shaft connecting assembly 220.

In particular, the rotor shaft 210 is of known type and therefore will not be further detailed.

Preferably, the rotor shaft 210 is made of nonmagnetic material.

In the first system assembly 200, the first shaft connecting assembly 220 is configured for connecting the rotor assembly 100 to the rotor shaft 210.

In an example, the first shaft connecting assembly 220 is detachable from the rotor assembly 100 and/or the rotor shaft 210.

In another example, the first shaft connecting assembly 220 is made from nonmagnetic material.

Further, in the first system assembly 200, the first shaft connecting assembly 220 comprises a cylindrical elongated body 110.

Furthermore, the rotor assembly 100 is configured to surround the first shaft connecting assembly 220.

In an example, the rotor assembly 100 is glued to the first shaft connecting assembly 220.

However, the rotor assembly 100 may be fixed to the first shaft connecting assembly 220 in any other suitable manner, without requiring any substantial modification of the subject application.

Further, the rotor shaft 210 is configured to longitudinally protrude from the distal ends of the cylindrical elongated body 110 such that rotation of the rotor shaft 210 causes simultaneous and synchronous rotation of the cylindrical elongated body 110.

In an example, the rotor shaft 210 is further configured to extend longitudinally through the cylindrical elongated body 110.

In an implementation of the current embodiment of the system assembly, the first shaft connecting assembly 220 further comprises a first flange, a second flange and a plurality of longitudinal rods.

Furthermore, in the current implementation of the current embodiment of the system assembly, the rotor assembly 100 is configured to be flanked by the first flange and the second flange.

Moreover, in the current implementation of the current embodiment of the system assembly, the longitudinal rods are configured to extend between the first flange and the second flange, through the rotor assembly 100.

In another implementation of the current embodiment of the system assembly, each rotor pole segment of the rotor assembly comprises a plurality of grooves extending longitudinally along all or part of the outer surface of the cylindrical body.

Furthermore, in the current implementation of the current embodiment of the system assembly, the shaft connecting assembly comprises a plurality of outer teeth extending longitudinally, continuously and/or discontinuously, and projecting from the outer surface of the cylindrical body.

Particularly, each tooth is shaped to slidably engage and fit in a corresponding groove.

In an example, the outer teeth are made of nonmagnetic material.

In another example, the outer teeth are made of magnetic material. Indeed, as the central part of the system assembly is less sensitive magnetically, one can use magnetic material for the outer teeth.

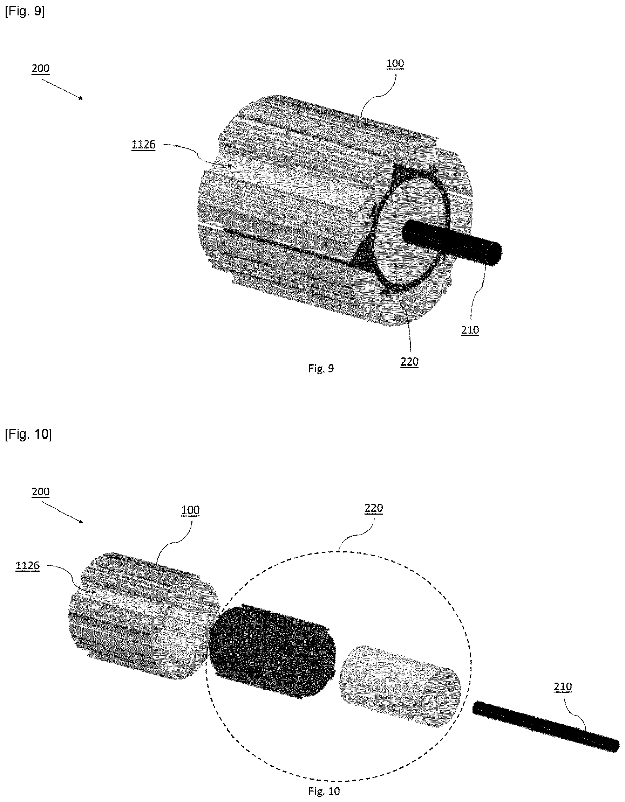

In an example of the current implementation of the current embodiment of the system assembly, as shown in figure 9, figure 10 and figure 11, at least one groove is a dovetail groove and at least one outer engaging arm is a dovetail member.

In yet another implementation of the current embodiment of the system assembly, each rotor pole segment of the rotor assembly comprises a plurality of teeth extending longitudinally, continuously and/or discontinuously, along all or part of the outer surface of the cylindrical body.

Furthermore, in the current implementation of the current embodiment of the system assembly, the shaft connecting assembly comprises a plurality of outer grooves extending longitudinally and projecting from the outer surface of the cylindrical body.

Particularly, each tooth is shaped to slidably engage and fit in a corresponding groove.

For instance, the outer teeth are made of nonmagnetic material.

In an example of the current implementation of the current embodiment of the system assembly, at least one groove is a dovetail groove and at least one outer engaging arm is a dovetail member.

## - A second system

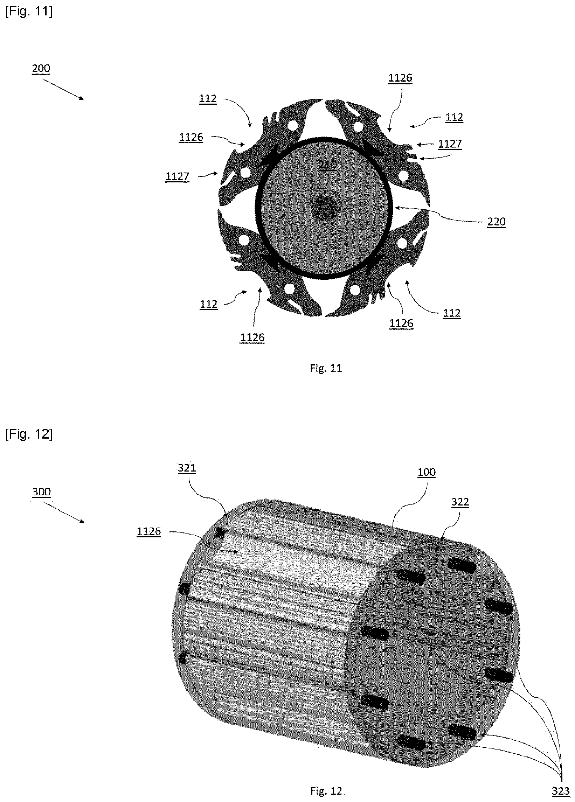

In an embodiment of the system assembly, as shown in figure 12, figure 13 and figure 14, a second system assembly 300 comprises a rotor assembly 100 as described above, a rotor shaft 310 and a second shaft connecting assembly.

In particular, the rotor shaft 310 is of known type and therefore will not be further detailed.

Preferably, the rotor shaft 310 is made of nonmagnetic material.

In the second system assembly 300, the second shaft connecting assembly is configured for connecting the rotor assembly 100 to the rotor shaft 310.

In an example, the second shaft connecting assembly is detachable from the rotor assembly 100 and/or the rotor shaft 310.

In another example, the second shaft connecting assembly is made from nonmagnetic material.

Further, in the second system assembly 300, the second shaft connecting assembly comprises a first flange 321, a second flange 322 and a plurality of longitudinal rods 323.

Furthermore, the rotor assembly 100 is configured to be flanked by the first flange 321 and the second flange 322.

Moreover, the longitudinal rods 323 are configured to extend between the first flange 321 and the second flange 322, through the rotor assembly 100.

In addition, the rotor shaft 310 is configured to longitudinally protrude from the distal ends of the first flange 321 and the second flange 322 such that rotation of the rotor shaft 310 causes simultaneous and synchronous rotation of the first flange 321, the second flange 322 and the rotor assembly 100.

In an example, the rotor shaft 310 is further configured to extend longitudinally through the cylindrical elongated body 110.

**- Adding permanent magnets to the systems**

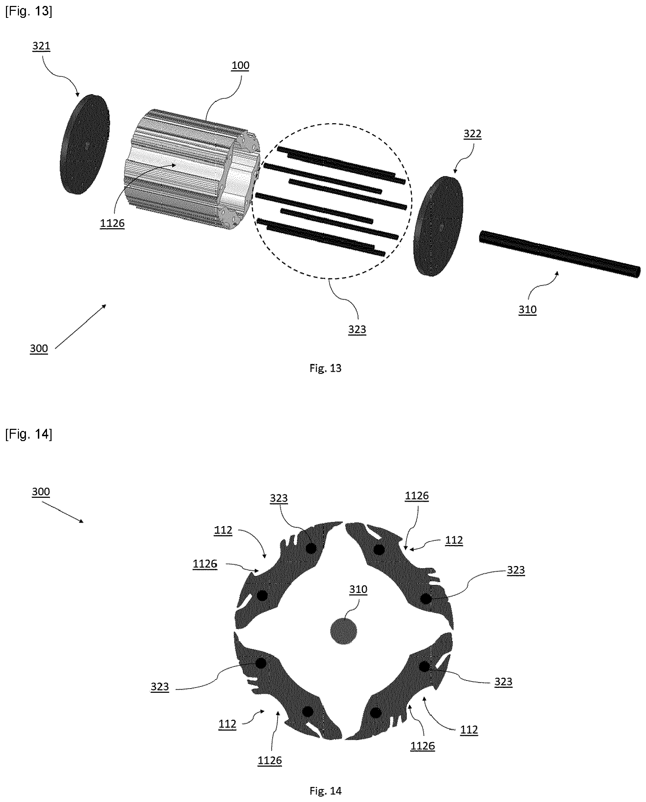

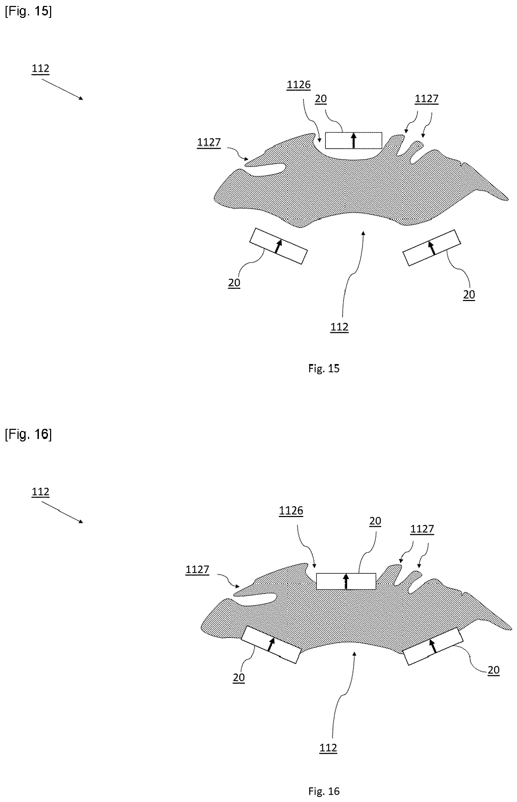

In an embodiment of the system assembly, as shown in figure 14 and figure 15, the system assembly further comprises at least one permanent magnet 20.

In other words, one should understand that in that embodiment, the system assembly may comprise more than one permanent magnet 20 arranged in the d-axis.

In particular, the permanent magnet 20 is arranged at the top and/or on the bottom of at least one rotor magnetic pole segment 112 thereby co-acting with the respective rotor magnetic pole segment 112.

In an example, the system assembly of the current embodiment comprises one or more permanent magnets 20 arranged on the bottom of at least one rotor magnetic pole segment 112.

In another example, where the system assembly comprises at least one inwardly facing recessed portion 1126 of a rotor magnetic pole segment 112, the system assembly of the current embodiment comprises one permanent magnet 20 arranged at the top of inwardly facing recessed portion 1126.

In an implementation of the current embodiment, the permanent magnet 20 is separated from the associated rotor magnetic pole segment 112.

In another implementation of the current embodiment, at least a portion of the permanent magnet 20 is at least partly buried within the associated rotor magnetic pole segment 112.

In yet another implementation of the current embodiment, each of the one or more permanent magnets 20 has a magnetization direction and is further arranged such that the magnetization direction of the one or more permanent magnets 20 is directed substantially toward a focus axis located in the vicinity of the q-axis.

In an example of the current implementation of the current embodiment, the focus axis is the q-axis.

In another example of the current implementation of the current embodiment, the focus axis is angularly offset by a predetermined offset angle relative to the q-axis.

For instance, the predetermined offset angle is obtained according to the following formula: $\alpha = \pm\frac{90°}{p}$ where $\alpha$ is the predetermined offset angle and $p$ is the number of pole pairs of the rotor assembly 100.

However, other values of the predetermined offset angle may be contemplated, without requiring any substantial modification of the subject application.

**A synchronous reluctance machine comprising the rotor assembly of the subject application**

The subject application also relates to a synchronous reluctance machine that comprises at least one a rotor assembly 100 as described above.

In an example, the synchronous reluctance machine is a motor in a drive or assembly.

In another example, the synchronous reluctance machine is part of a motor in a drive or assembly.

For instance, the motor is either a single phase or a multi-phase motor.

In yet another example, the synchronous reluctance machine is a generator in a drive or assembly.

In yet another example, the synchronous reluctance machine is part of a generator in a drive or assembly.

**Working machines comprising the synchronous reluctance machine of the subject application**

The subject application also relates to a working machine that comprises the synchronous reluctance machine as described above.

In an embodiment, the working machine is in the form of a vehicle.

In an example, the vehicle is a terrestrial vehicle such as a car, a cab, a bus or a train.

In another example, the vehicle is a water vehicle such as a boat, a ferry or a cruiser.

In yet another example, the vehicle is an aircraft such a plane, a helicopter, a glider, an aerostat or air ship.

However, the working machine can be any suitable electrical machine, such as a machine tool or the like.

**Manufacturing methods of the rotor assembly of the subject**

The subject application also relates to a method for producing rotor assemblies for radial/axial synchronous reluctance machine.

**- a first manufacturing method**

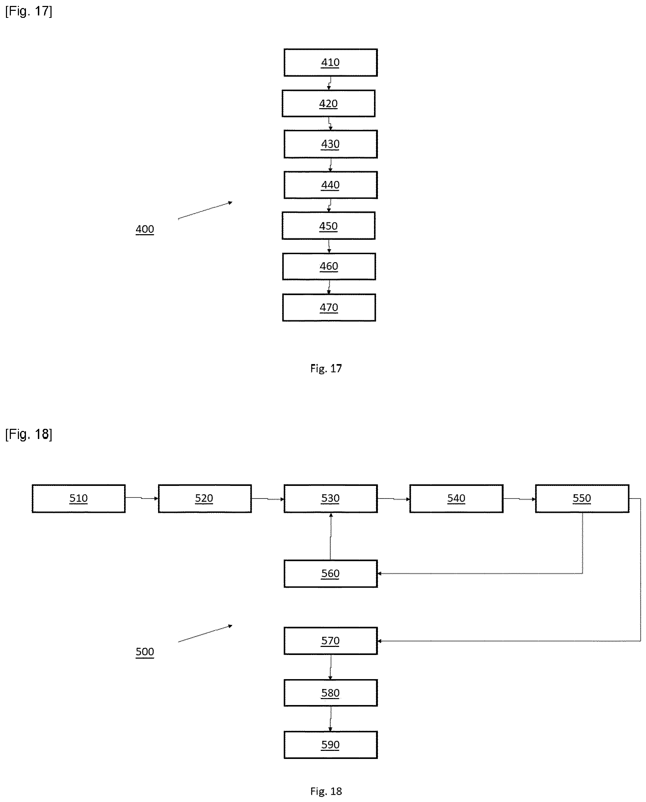

In a first embodiment of the producing method, as shown in figure 17, a method 400 is designed for producing the rotor assembly 100 for a radial synchronous reluctance machine.

In step 410, there is provided an elongated body 110 having a central longitudinal rotation axis 111, a circumference and a cross-section.

In step 420, there is defined the cross-section of the elongated body 110 to comprise at least one pair of rotor magnetic pole segments 112, including a first rotor magnetic pole segment 112 and a second rotor magnetic pole segment 112.

In step 430, there is arranged the first and second rotor magnetic pole segments 112 relatively to each other and circumferentially adjacent to one another around the central longitudinal rotation axis 111.

In step 440, there is defined, as seen in a clockwise direction or in an anti-clockwise direction of the cross-section of the elongated body 110, each rotor magnetic pole segment 112 to comprise a central region 1121 flanked by a first exterior region 1122 and a second exterior region 1123, the first exterior region 1122 and the second exterior region 1123 respectively extending from the central region 1121.

In step 450, there is defined each rotor magnetic pole segment 112 to be asymmetrical with respect to at least the bisector 10 of the rotor magnetic pole segment 112.

In step 460, there is arranged a free end of the first exterior region 1122 of the first rotor magnetic pole segment 112, called first free end 1122a and a free end of the second exterior region 1123 of the second rotor magnetic pole segment 112, called second free end 1123a, to face each other.

And in step 470, there is arranged the first free end 1122a and the second free end 1123a such that, when being exposed to a magnetic flux, the first free end 1122a and the second free end 1123a have no surface contact with one another or a minimum surface contact 1125 with one another, thereby forming a flux barrier for inhibiting the magnetic flux from flowing between the first free end 1122a and the second free end 1123a, whereby reluctance is increased between the first free end 1122a and the second free end 1123a.

**- a second manufacturing method**

In a second embodiment of the producing method, a method (not shown) is designed for producing the rotor assembly 100 for a radial synchronous reluctance machine.

In a first step, there is provided and elongated hollow cylinder body having a central longitudinal rotation axis, a circumference and a width.

Particularly, the elongated hollow cylinder body is made of ferromagnetic-based material.

In a second step, there is dug into the width of the elongated hollow cylinder body according to a pattern formed by the cross-section of the rotor assembly 100 as described above.

In an embodiment of the second step, there is used a punching means for puncturing the width of the elongated hollow cylinder body.

In particular, the punching means is of known type and therefore will not be further detailed.

In an embodiment of the second step, there is used a cutting means for cutting off the width of the elongated hollow cylinder body.

In particular, the cutting means is of known type and therefore will not be further detailed.

**- a third manufacturing method**

In an embodiment of the producing method, as shown in figure 18, a method 500 is designed for producing a rotor assembly for an axial synchronous reluctance machine.

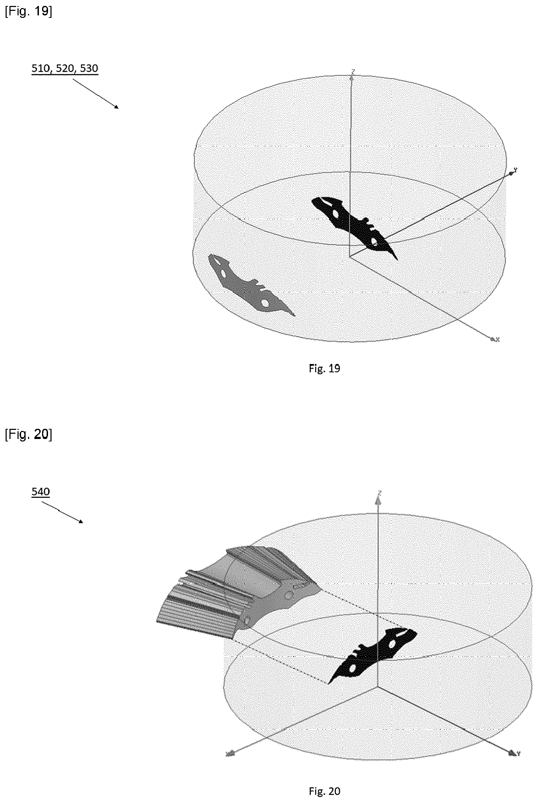

In step 510, as shown in figure 19, there is provided at least one elongated hollow cylinder body having a central longitudinal rotation axis, a circumference, an inner surface and a width. Particularly, the elongated hollow cylinder body is made of high permeability soft magnetic material.

In step 520, as shown in figure 19, there is provided a cross-section of the rotor assembly 100 as described above.

In step 530, as shown in figure 19, there is projected the cross-section of the rotor assembly 100 onto the inner surface of the elongated hollow cylinder body thereby forming a projected pattern on the inner surface of the elongated hollow cylinder body.

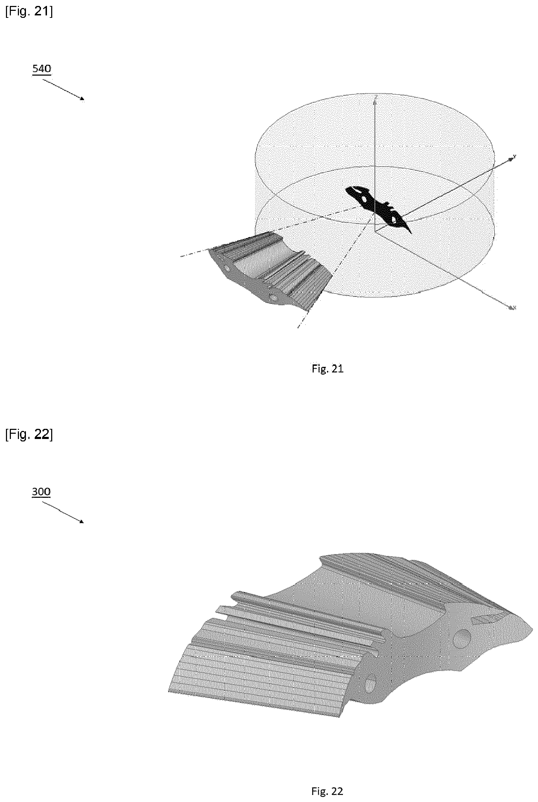

In step 540, as shown in figure 20 and figure 21, there is extended the projected pattern along a circular cross-section of the elongated hollow cylinder body in a direction that is radial relative to the circular cross-section thereby forming an extended projected pattern.

In step 550, as shown in figure 22, there is dug into the width of the elongated hollow cylinder body according to the extended projected pattern to extract a first rotor magnetic pole segment for an axial synchronous reluctance machine.

In step 560, there is repeated the steps 330 to 350, to extract at least a second rotor magnetic pole segment for an axial synchronous reluctance machine.

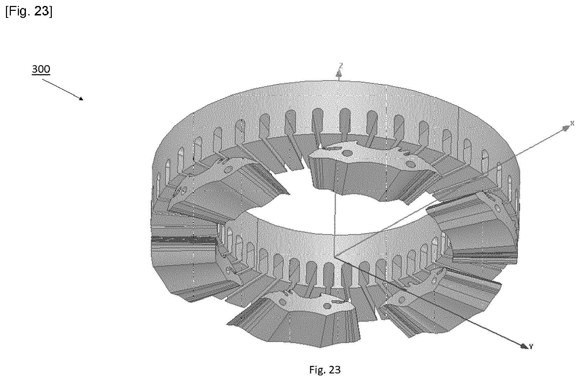

In step 570, as shown in figure 23, there is arranged the first and second rotor magnetic pole segments relatively to each other and circumferentially adjacent to one another around a central longitudinal rotation axis.

In step 580, as shown in figure 23, there is arranged a free end of the first exterior region of the first rotor magnetic pole segment, called first free end and a free end of the second exterior region of the second rotor magnetic pole segment, called second free end, to face each other.

And in step 590, as shown in figure 23, there is arranged the first free end and the second free end such that, when being exposed to a magnetic flux, the first free end and the second free end have no surface contact with one another or a minimum surface contact 1125 with one another, thereby forming a flux barrier for inhibiting the magnetic flux from flowing between the first free end and the second free end, whereby reluctance is increased between the first free end and the second free end.

The description of the subject application has been presented for purposes of illustration and description but is not intended to be exhaustive or limited to the application in the form disclosed. The embodiments were chosen and described to better explain the principles of the application and the practical application, and to enable the skilled person to understand the application for various embodiments with various modifications as are suited to the particular use contemplated.

**Various other embodiments**

For example, the rotor assembly has been described as a cylindrical internal rotor.
However, the skilled person could easily adapt the teachings of the subject application to make a rotor assembly in a form of an annular external rotor.
Also, the skilled person could easily adapt the teachings of the subject application to make a rotor assembly for a transverse synchronous reluctance machine or a mover assembly for a linear synchronous reluctance machine.

**Claims**

1. A rotor assembly (100) for a radial synchronous reluctance machine, the rotor assembly (100) comprising:

   - an elongated body (110) having a central longitudinal rotation axis (111), a circumference and a cross-section,
   the cross-section of the elongated body (110) comprising:
   - at least one pair of rotor magnetic pole segments (112), including a first rotor magnetic pole segment (112) and a second rotor magnetic pole segment (112) that are arranged relatively to each other and circumferentially adjacent to one another around the central longitudinal rotation axis (111),

   wherein, as seen in a clockwise direction or in an anti-clockwise direction of the cross-section of the elongated body (110), each rotor magnetic pole segment (112) comprises a central region (1121) flanked by a first exterior region (1122) and a second exterior region (1123), the first exterior region

(1122) and the second exterior region (1123) respectively extending from the central region (1121), each rotor magnetic pole segment (112) being asymmetrical with respect to at least the bisector (10) of the rotor magnetic pole segment (112)
   and wherein, the rotor assembly (100) is arranged such that, when being exposed to a magnetic flux,

   - a free end of the first exterior region (1122) of the first rotor magnetic pole segment (112), called first free end (1122a) and a free end of the second exterior region (1123) of the second rotor magnetic pole segment (112), called second free end (1123a), are facing each other, the first free end (1122a) and the second free end (1123a) having no surface contact with one another or a minimum surface contact (1125) with one another, thereby forming a flux barrier for inhibiting the magnetic flux from flowing between the first free end (1122a) and the second free end (1123a), whereby reluctance is increased between the first free end (1122a) and the second free end (1123a).

2. The rotor assembly (100) of claim 1 wherein, where no surface contact exists between the first free end (1122a) and the second free end (1123a), the angular distance that exists between the first free end (1122a) and the second free end (1123a) is a predetermined angular distance (1124) and the rotor assembly (100) is further arranged such that a ratio of the predetermined angular distance (1124) relative to a radius of the rotor assembly (100) is between 0,1% and 20%.

3. The rotor assembly (100) of claim 1 wherein, where a minimum surface contact (1125) exists between the first free end (1122a) and the second free end (1123a), the rotor assembly (100) is further arranged such that a ratio of the minimum surface contact (1125) relative to a radius of the rotor assembly (100) is less than or equal to 10%.

4. The rotor assembly (100) of one of claims 1 to 3 wherein, for at least one rotor magnetic pole segment (112), the first exterior region (1122) and/or the second exterior region (1123) has a tapered shape that is increasingly finer from the central region (1121) toward its respective free end.

5. The rotor assembly (100) of any one of claims 1 to 4 wherein, for at least one rotor magnetic pole segment (112), the central region (1121) comprises at least one inwardly facing recessed portion (1126), the recessed portion (1126) being provided with a bisector 11 that is angularly offset relative to the bisector (10) of the rotor magnetic pole segment (112).

6. The rotor assembly (100) of claim 5, wherein a deepest point of the depth of the recessed portion (1126) is relative to the bisector (11) of the recessed portion (1126).

7. The rotor assembly of any one of claims 1 to 6 wherein, for at least one rotor magnetic pole segment (112), the angular extension $\alpha_{1122}$ of the first exterior region (1122) is different from the angular extension $\alpha_{1123}$ of the second exterior region (1123).

8. The rotor assembly (100) of any one of claims 1 to 7 wherein the cross-section of the elongated body (110) further comprises that, for at least one rotor magnetic pole segment (112),

    - the first exterior region (1122) has at least first and second outwardly arcuated sections, called first and second sections (1122b, 1122c), the first section (1122b) being closer to the central region (1121) than the second section (1122c),
    - the second exterior region (1123) has at least one outwardly arcuated section, called third section (1123b),
    wherein,
    - the first, second and third sections (1122b, 1122c, 1123b) each have a substantially constant radius of curvature,
    - the first and second sections (1122b, 1122c) respectively have a first radius $r_1$ and a second radius $r_2$, the second radius $r_2$ being longer than the first radius $r_1$, and
    - the third section (1123b) has a third radius $r_3$ different from the second radius $r_2$.

9. The rotor assembly (100) of claim 8, wherein the first and/or second and/or third sections (1122b, 1122c, 1123b), each comprise at least one cut out portion forming tooth (1127) thereby locally modulating an air gap between the rotor assembly (100) and a stator so as to smooth the torque, whereby reducing torque ripples.

10. The rotor assembly (100) of any one of claims 1 to 9, wherein the cross-section of the elongated body (110) further comprises as many pairs of contiguous hollow frames (1128) of material as the number of pairs of rotor magnetic pole segments (112), wherein each rotor magnetic pole segment (112) is circumscribed by a respective hollow frame (1128).

11. System assembly (200) for a radial synchronous reluctance machine, the system assembly (200) comprising:

    - a rotor assembly (100) according to any one of claims 1 to 10,
    - a rotor shaft (210), and
    - a first shaft connecting assembly (220) configured for connecting the rotor assembly (100) to the rotor shaft (210),
    wherein,
    - the first shaft connecting assembly (220) comprises a cylindrical elongated body (110),
    - the rotor assembly (100) is configured to surround the first shaft connecting assembly (220), and
    - the rotor shaft (210) is configured to longitudinally protrude from the distal ends of the cylindrical elongated body (110) such that rotation of the rotor shaft (210) causes simultaneous and synchronous rotation of the cylindrical elongated body (110).

12. System assembly (300) for a radial synchronous reluctance machine, the system assembly (300) comprising:

    - a rotor assembly (100) according to any one of claims 1 to 10,
    - a rotor shaft (310), and
    - a second shaft connecting assembly configured for connecting the rotor assembly (100) to the rotor shaft (310), the second shaft connecting assembly comprising a first flange (321), a second flange (322) and a plurality of longitudinal rods (323),
    wherein,
    - the rotor assembly (100) is configured to be flanked by the first flange (321) and the second flange (322),
    - the longitudinal rods (323) are configured to extend between the first flange (321) and the second flange (322), through the rotor assembly (100), and
    - the rotor shaft (310) is configured to longitudinally protrude from the distal ends of the first flange (321) and the second flange (322) such that rotation of the rotor shaft (310) causes simultaneous and synchronous rotation of the first flange (321), the second flange (322) and the rotor assembly (100).

13. The system assembly (200, 300) of any one of claims 11 to 12, further comprising at least one permanent magnet (20) arranged at the top and/or on the bottom of at least one rotor magnetic pole segment (112) thereby co-acting with the respective rotor magnetic pole segment (112), the permanent magnet (20) having a magnetization direction and being arranged such that its magnetization direction is directed substantially toward a focus axis located in the vicinity of the q-axis.

**14.** A method (400) for producing a rotor assembly (100) for a radial synchronous reluctance machine, the method comprising:

- providing (410) an elongated body (110) having a central longitudinal rotation axis (111), a circumference and a cross-section,
- defining (420) the cross-section of the elongated body (110) to comprise at least one pair of rotor magnetic pole segments (112), including a first rotor magnetic pole segment (112) and a second rotor magnetic pole segment (112),
- arranging (430) the first and second rotor magnetic pole segments (112) relatively to each other and circumferentially adjacent to one another around the central longitudinal rotation axis (111),
- defining (440), as seen in a clockwise direction or in an anti-clockwise direction of the cross-section of the elongated body (110), each rotor magnetic pole segment (112) to comprise a central region (1121) flanked by a first exterior region (1122) and a second exterior region (1123), the first exterior region (1122) and the second exterior region (1123) respectively extending from the central region (1121),
- defining (450) each rotor magnetic pole segment (112) to be asymmetrical with respect to at least the bisector (10) of the rotor magnetic pole segment (112), and
- arranging (460) a free end of the first exterior region (1122) of the first rotor magnetic pole segment (112), called first free end (1122a) and a free end of the second exterior region (1123) of the second rotor magnetic pole segment (112), called second free end (1123a), to face each other,
- arranging (470) the first free end (1122a) and the second free end (1123a) such that, when being exposed to a magnetic flux, the first free end (1122a) and the second free end (1123a) have no surface contact with one another or a minimum surface contact (1125) with one another, thereby forming a flux barrier for inhibiting the magnetic flux from flowing between the first free end (1122a) and the second free end (1123a), whereby reluctance is increased between the first free end (1122a) and the second free end (1123a).

**15.** A method (500) for producing a rotor assembly for an axial synchronous reluctance machine, the method comprising:

- providing (510) at least one elongated hollow cylinder body having a central longitudinal rotation axis, a circumference, an inner surface and a width, the elongated hollow cylinder body being made of ferromagnetic-based material,
- providing (520) a cross-section of the rotor assembly (100) according to any one of claims 1 to 10,
- projecting (530) the cross-section of the rotor assembly (100) onto the inner surface of the elongated hollow cylinder body thereby forming a projected pattern on the inner surface of the elongated hollow cylinder body
- extending (540) the projected pattern along a circular cross-section of the elongated hollow cylinder body in a direction that is radial relative to the circular cross-section thereby forming an extended projected pattern
- digging (550) into the width of the elongated hollow cylinder body according to the extended projected pattern in order to extract a first rotor magnetic pole segment for an axial synchronous reluctance machine,
- repeating (560) the projecting step (530) to the digging step (550), in order to extract at least a second rotor magnetic pole segment for an axial synchronous reluctance machine,
- arranging (570) the first and second rotor magnetic pole segments relatively to each other and circumferentially adjacent to one another around a central longitudinal rotation axis,
- arranging (580) a free end of the first exterior region of the first rotor magnetic pole segment, called first free end and a free end of the second exterior region of the second rotor magnetic pole segment, called second free end, to face each other
- arranging (590) the first free end and the second free end such that, when being exposed to a magnetic flux, the first free end and the second free end have no surface contact with one another or a minimum surface contact with one another, thereby forming a flux barrier for inhibiting the magnetic flux from flowing between the first free end and the second free end, whereby reluctance is increased between the first free end and the second free end.

[Fig. 1]

Fig. 1

[Fig. 2]

Fig. 2

[Fig. 3]

1126  1121  1122

112

1123a

1123

1122a

10

Fig. 3

[Fig. 4]

1126  113

112

$\alpha_{1123}$  $\alpha_{1122}$

1123b  $r_3$  11  $r_1$  1122b  1122c

10  $r_2$

Fig. 4

14

[Fig. 5]

100

1127    1126    1127    1126    1127    112    1127    1127    1126    1127    1126

Fig. 5

[Fig. 6]

1126    1127    1123a    1122a    1127    1126

1127    1125    112    1127    112

Fig. 6

[Fig. 7]

Fig. 7

[Fig. 8]

Fig. 8

[Fig. 9]

Fig. 9

[Fig. 10]

Fig. 10

[Fig. 11]

Fig. 11

[Fig. 12]

Fig. 12

[Fig. 13]

321

100

322

1126

323

310

300

Fig. 13

[Fig. 14]

300

323

1126

112

112

1126

323

310

323

323

112

323

112

1126

1126

Fig. 14

[Fig. 15]

112

1126
20

1127

1127

20

20

112

Fig. 15

[Fig. 16]

112

1126
20
1127

1127

20

20

112

Fig. 16

[Fig. 17]

```
        ┌──────────┐
        │   410    │
        └──────────┘
              │
              ▼
        ┌──────────┐
        │   420    │
        └──────────┘
              │
              ▼
        ┌──────────┐
        │   430    │
        └──────────┘
              │
              ▼
        ┌──────────┐
        │   440    │
        └──────────┘
              │
   400        ▼
 ───▶   ┌──────────┐
        │   450    │
        └──────────┘
              │
              ▼
        ┌──────────┐
        │   460    │
        └──────────┘
              │
              ▼
        ┌──────────┐
        │   470    │
        └──────────┘
```

Fig. 17

[Fig. 18]

```
┌───────┐    ┌───────┐    ┌───────┐    ┌───────┐    ┌───────┐
│  510  │──▶ │  520  │──▶ │  530  │──▶ │  540  │──▶ │  550  │──┐
└───────┘    └───────┘    └───────┘    └───────┘    └───────┘  │
                              ▲                                 │
                              │         ┌───────┐               │
                              └─────────│  560  │◀──────────────┘
                                        └───────┘
             500
           ─────▶            ┌───────┐
                             │  570  │◀──────────────────────────┘
                             └───────┘
                                 │
                                 ▼
                             ┌───────┐
                             │  580  │
                             └───────┘
                                 │
                                 ▼
                             ┌───────┐
                             │  590  │
                             └───────┘
```

Fig. 18

[Fig. 19]

510, 520, 530

Fig. 19

[Fig. 20]

540

Fig. 20

[Fig. 21]

540

Fig. 21

[Fig. 22]

300

Fig. 22

[Fig. 23]

300

Fig. 23

Europäisches
Patentamt

European
Patent Office

Office européen
des brevets

# EUROPEAN SEARCH REPORT

Application Number

EP 22 30 5373

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | CN 104 795 953 A (UNIV SHANDONG)<br>22 July 2015 (2015-07-22)<br>* paragraph [0043] – paragraph [0047];<br>figures 5-8 * | 1,4,7,<br>11,12,14<br>3,10,15 | INV.<br>H02K1/24<br>H02K1/2746<br>H02K1/30 |
| X | JP S57 27839 U (JP)<br>13 February 1982 (1982-02-13)<br>* the whole document * | 1,2,5-9,<br>14 | |
| X | GB 1 292 111 A (NAT RES DEV [GB])<br>11 October 1972 (1972-10-11)<br>* page 1, line 81 – line 89; figure 1 *<br>* page 2, line 45 – line 129; figure 2 * | 1,4-6,14 | |
| X | JP 2008 295282 A (DENSO CORP)<br>4 December 2008 (2008-12-04)<br>* paragraph [0030] – paragraph [0031];<br>figure 1 *<br>* paragraph [0081] – paragraph [0082];<br>figures 35-37 * | 1,7,11,<br>13,14 | |

TECHNICAL FIELDS
SEARCHED      (IPC)

H02K

The present search report has been drawn up for all claims

| Place of search | Date of completion of the search | Examiner |
|---|---|---|
| The Hague | 16 September 2022 | Moyaerts, Laurent |

EPO FORM 1503 03.82 (P04C01)

**ANNEX TO THE EUROPEAN SEARCH REPORT
ON EUROPEAN PATENT APPLICATION NO.**

EP 22 30 5373

This annex lists the patent family members relating to the patent documents cited in the above-mentioned European search report.
The members are as contained in the European Patent Office EDP file on
The European Patent Office is in no way liable for these particulars which are merely given for the purpose of information.

16-09-2022

| Patent document cited in search report | | Publication date | Patent family member(s) | | | Publication date |
|---|---|---|---|---|---|---|
| CN 104795953 | A | 22-07-2015 | NONE | | | |
| JP S5727839 | U | 13-02-1982 | NONE | | | |
| GB 1292111 | A | 11-10-1972 | NONE | | | |
| JP 2008295282 | A | 04-12-2008 | JP | 2008295282 | A | 04-12-2008 |
| | | | JP | 2012110227 | A | 07-06-2012 |
| | | | JP | 2014039475 | A | 27-02-2014 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1786088 B1
- EP 2406870 B1
- EP 3128647 B1